# EUROPÄISCHE PATENTSCHRIFT

(11) **EP 2 578 876 B1**
(45) Veröffentlichungstag und Bekanntmachung des Hinweises auf die Patenterteilung: **04.06.2014**
(21) Anmeldenummer: 11183948.6
(22) Anmeldetag: 05.10.2011
(51) Int. Cl.: F03D 7/02, F03D 7/00

(54) **Pitchsystem für eine Windenergieanlage und Verfahren zum Betreiben eines Pitchsystems**
Pitch system for a wind energy assembly and method for operating the same
Système de pas pour une éolienne et procédé de fonctionnement d'un système de pas

(43) Veröffentlichungstag der Anmeldung: 10.04.2013
(73) Patentinhaber: Siemens Aktiengesellschaft, 80333 München (DE)
(72) Erfinder: Ahnert, Karsten, 09112 Chemnitz (DE); Demuth, Thomas, 09212 Limbach-Oberfrohna (DE); Hellmich, Steffen, 210012 Nanjing, Jiangsu Province (CN); Mauersberger, Markus, 09126 Chemnitz (DE); Männer, Andres, 09126 Chemnitz (DE)

(56) Entgegenhaltungen:
- DE-A1-102008 025 944
- DE-A1-102009 003 843
- DE-A1-102009 025 819
- US-A1- 2010 158 687

## Beschreibung

Die Erfindung betrifft ein Pitchsystem für eine Windenergieanlage und ein Verfahren zum Betreiben eines Pitchsystems. Das Pitchsystem weist wenigstens eine Antriebseinrichtung zum Einstellen eines Anstellwinkels wenigstens eines Rotorblattes der Windenergieanlage und einen Notenergiespeicher zum Betreiben wenigsten einer der Antriebseinrichtungen bei Ausfall einer externen elektrischen Energieversorgung auf. Mittels des Verfahrens wird eine Kenngröße des Notenergiespeichers überprüft.

Bei Windenergieanlagen kann durch ein Pitchsystem ein Anstellwinkel (Englisch: Pitch) entsprechend der im Betrieb auf das Rotorblatt wirkenden Windlasten eingestellt und hierdurch eine Antriebsmoment für einen elektrischen Generator der Windenergieanlage reguliert werden. Die benötigten Anstellwinkel werden dem Pitchsystem dazu durch ein entsprechendes Ansteuersignal einer Generatorsteuerung vorgegeben. Diese Generatorsteuerung wird auch als Turbinensteuerung bezeichnet.

Ein elektrisches Pitchsystems kann einen Notenergiespeicher aufweisen. Dieser ist entsprechend eines Energiebedarfs dimensioniert, um ein Rotorblatt bei Ausfall der externen Energieversorgung in eine Sicherungsposition zu fahren (Notfahrt) und hierdurch die Windenergieanlage sicher abzubremsen. Üblich ist hierbei, die so genannte Fahnenposition anzufahren, in welcher eine Blattebene des Rotorblatts senkrecht zur Rotationsebene der Rotorblätter steht.

Der Notenergiespeicher kann Doppelschichtkondensatoren aufweisen. Diese altern über die Betriebsdauer und verlieren hierdurch an Kapazität. Aus diesem Grund ist ein Überwachen und regelmäßiges Prüfen des Notenergiespeichers notwendig, um die Funktion der Notfahrt gewährleisten und den Austauschzeitpunkt des Speichers bestimmen zu können.

Aus der DE 10 2008 025 944 B4 ist bekannt, zum Überprüfen eines Notenergiespeichers den Stellantrieb eines Pitchsystems von einem Normalbetriebsmodus in einen Prüfmodus umzuschalten, in welchem dieser als Last gesteuert wird. Dadurch kann eine vorwählbare und reproduzierbare Last für den Notenergiespeicher eingestellt werden.

Aus der DE 10 2009 003 843 A1 ist bekannt, einen Notenergiespeicher eines Pitchsystems in aufeinanderfolgenden zeitlichen Abständen vorübergehend von dessen Ladegerät zu trennen und mit einer elektrischen Prüflast, zum Beispiel einem Leistungswiderstand, zu beaufschlagen. Aus dem Entladeverhalten wird der Ladezustand des Notenergiespeichers ermittelt.

Gemäß der DE 10 2009 025 819 A1 wird das Entladeverhalten eines Notenergiespeichers beobachtet, indem dieser über einen Umrichter bei blockiertem Elektromotor eines Stellantriebs belastet wird. Aus dieser Beobachtung wird eine Kapazität des Notenergiespeichers bestimmt.

Nachteilig an heutigen Lösungen ist, dass zum Überprüfen eines Notenergiespeichers verhältnismäßig kostspielige elektrische Prüfschaltungen benötigt werden und das Überprüfen Zeit kostet, während welcher die Windenergieanlage nicht zum Erzeugen von elektrischer Energie genutzt werden kann.

In der US 2010/0158687 A1 ist eine Windkraftanlage beschrieben, bei welcher für einen Batterietest des Notenergiespeichers eines Pitchsystems ein Anstellwinkel von zumindest einem Rotorblatt ausschließlich mithilfe von elektrischer Leistung aus der Batterie verstellt wird. Falls erkannt wird, dass die Batterie zu verbraucht ist, kann die Windkraftanlage angehalten werden.

Es ist Aufgabe der vorliegenden Erfindung, einen sicheren Betrieb einer Windenergieanlage bei gleichzeitiger hoher Verfügbarkeit derselben zu gewährleisten.

Die Aufgabe wird durch das Verfahren gemäß Patentanspruch 1 und das Pitchsystem gemäß Patentanspruch 9 gelöst. Vorteilhafte Weiterbildungen des erfindungsgemäßen Verfahrens und des erfindungsgemäßen Pitchsystems sind durch die Unteransprüche gegeben.

Ein Pitchsystem einer Windkraftanlage wird nach dem erfindungsgemäßen Verfahren betrieben, indem in einem Normalbetriebsmodus der Windkraftanlage mittels einer Antriebseinrichtung des Pitchsystems ein Anstellwinkel eines Rotorblattes der Windkraftanlage in Abhängigkeit von einem Ansteuersignal einer Generatorsteuerung der Windkraftanlage eingestellt wird. Hierbei wird die Antriebseinrichtung zumindest zeitweise mit elektrischer Energie aus einem (bezüglich des Pitchsystems) externen elektrischen Versorgungsnetz versorgt. In einem zweiten Betriebsmodus, einem Notbetriebsmodus, wird das Rotorblatt mittels der Antriebseinrichtung in eine Sicherungsposition verfahren. Hierbei wird die Antriebseinrichtung mit elektrischer Energie aus einem Notenergiespeicher des Pitchsystems versorgt. Das Pitchsystem kann also z.B. im Notbetriebsmodus betrieben werden, wenn das externe Versorgungsnetz ausfällt und die Windkraftanlage deshalb abgefahren werden muss.

Um z.B. einen Alterungszustand des Notenergiespeichers festzustellen, wird bei dem erfindungsgemäßen Verfahren zum Überprüfen einer Kenngröße des Notenergiespeichers die Antriebseinheit auch in Normalbetriebsmodus zeitweise ausschließlich mit elektrischer Energie aus dem Notenergiespeicher versorgt.

Da sich die Windenergieanlage während der Überprüfung im Normalbetriebsmodus befindet, ist als elektrische Last zum Überprüfen des Notenergiespeichers kein dedizierter Lastwiderstand verwendbar. Allerdings wird die Antriebseinheit von Zeit zu Zeit den Anstellwinkel eines Rotorblatts verändern und hierbei Energie verbrauchen. Dies kann dann dazu genutzt werden, das Entladeverhalten des Notenergiespeichers zu beobachten und daraus Rückschlüsse auf seinen Alterungszustand zu schließen.

Durch das erfindungsgemäße Verfahren ergibt sich der Vorteil, dass die Verfügbarkeit des Systems für einen normalen Betrieb der Windkraftanlage wird somit erhöht, da für die Überprüfung des Notenergiespeichers die Windenergieanlage nicht gestoppt werden muss, sondern weiter Energie produzieren kann. Ein Umschalten von einem Betriebs- zu einem Prüfmodus des Stellantriebs ist nicht notwendig. Als weiterer Vorteil ergibt sich, dass als Last zum Entladen des Notenergiespeichers für dessen Überprüfung kein zusätzlicher Widerstand und kein festgebremster Elektromotor notwendig sind.

Das erfindungsgemäße Verfahren sieht vor, die Antriebseinrichtung und den Notenergiespeicher über wenigstens einen DC/DC-Wandler mit elektrischer Energie aus dem Versorgungsnetz zu versorgen. Zum Überprüfen der Kenngröße wird der wenigstens eine DC/DC-Wandler deaktiviert. Dann erfolgt die Versorgung der Antriebseinrichtung automatisch ausschließlich durch den Notenergiespeicher. Mit anderen Worten wird der DC/DC-Wandler als Schalter genutzt. Hierdurch ergibt sich der Vorteil, dass keine zusätzliche Schaltvorrichtung bereitgestellt werden muss, um während des Normalbetriebsmodus das Überprüfen der Kenngröße ermöglichen.

Das erfindungsgemäße Verfahren wird bevorzugt im Zusammenhang mit Energiespeichern verwendet, welche Doppelschichtkondensatoren, Lithium-Ionen-Batterien oder eine Kombination aus diesen Speichern (so genannte Hybridspeicher) umfasst. Eine Ausführungsform des erfindungsgemäßen Verfahrens ist entsprechend dazu ausgelegt, als Kenngröße eine Kapazität und/oder einen Innenwiderstand eines Kondensators des Notenergiespeichers, insbesondere eines Doppelschichtkondensators, zu überprüfen. Durch diese Weiterbildung wird es möglich, auch Notenergiespeicher mit Kondensatoren regelmäßig und häufig zu überprüfen und somit auch eine Windenergieanlage, in welcher Doppelschichtkondensatoren als Notenergiespeicher eingesetzt werden, zuverlässig zu betreiben. Die Überprüfung eines Kondensators kann vorsehen, dass die Antriebseinheit für eine vorbestimmte Zeitdauer mit der Energie aus dem Notenergiespeicher versorgt wird und anschließend lediglich geprüft wird, ob eine von dem Notenergiespeicher erzeugte Spannung noch oberhalb eines Schwellwerts liegt. Bevorzugt ist allerdings vorgesehen, einen Kapazitätswert für die Kapazität des Kondensators zu ermitteln. Dies ist die genaueste und damit zuverlässigste Methode, die Funktionstüchtigkeit des Doppelschichtkondensators zu überprüfen.

Eine geeignete Kenngröße, anhand welcher sich ein Alterungszustand des Notenergiespeichers feststellen lässt, ist beispielsweise, wie bereits erwähnt, eine Speicherkapazität oder ein Innenwiderstand. Diese sind abhängig von den Temperaturbedingungen während ihrer Bestimmung. Gemäß einer weiteren Ausführungsform des erfindungsgemäßen Verfahrens wird daher zum Überprüfen der Kenngröße wenigstens ein Wert zu wenigstens einer aus den folgenden Betriebsgrößen ermittelt: eine an dem Notenergiespeicher anliegenden elektrischen Spannung, einem zum oder aus dem Notenergiespeicher fließenden elektrischen Strom, einer Umgebungstemperatur des Notenergiespeichers, einer Innentemperatur des Notenergiespeichers. Das Ermitteln der Betriebsgröße kann entweder direkt oder aber auch indirekt durch Messen weiterer Betriebsgrößen und Rückschließen auf den Wert der gewünschten Betriebsgröße erfolgen.

Wird neben dem Strom und der Spannung auch eine Umgebungstemperatur oder eine Innentemperatur des Notenergiespeichers gemessen, so kann der Alterungszustand des Energiespeichers exakter bestimmt werden. Insbesondere Doppelschichtkondensatoren weisen eine temperaturabhängige Kapazität auf. Durch Beobachten des Auflade- und Endladevorgangs kann der Alterungszustand eines Doppelschichtkondensators somit exakter bestimmt werden. Auch eine verbesserte Ermittlung des Speicherinnenwiderstands ist hierdurch möglich.

Ein DC/DC-Wandler kann auch noch in einer weiteren Hinsicht vorteilhaft genutzt werden. Wird zum Überprüfen der Kenngröße ein Spannungswert zu einer von dem Notenergiespeicher erzeugten elektrischen Spannung benötigt, kann dieser Spannungswert mittels einer Spannungsmesseinrichtung eines DC/DC-Wandlers ermittelt werden. DC/DC-Wandler weisen in der Regel bereits eine Spannungsmesseinrichtung zum Einregeln ihrer Ausgangsspannung auf. Diese Spannungsmesseinrichtung kann somit doppelt genutzt werden. Es muss somit keine gesonderte Spannungsmesseinrichtung zum Überprüfen der Kenngröße des Notenergiespeichers bereitgestellt werden.

Durch eine andere Weiterbildung des erfindungsgemäßen Verfahrens ist das Überprüfen der Kenngröße des Notenergiespeichers auch während eines Stillstands eines Rotors der Windkraftanlage, also z.B. bei Windstille, ermöglicht. Gemäß dieser Weiterbildung wird im Normalbetrieb und während eines Stillstands des Rotors zum Überprüfen der Kenngröße der Anstellwinkel eines Rotorblatts in einem vorbestimmten Winkelbereich verfahren. Hierbei verbraucht die Antriebseinrichtung wieder Energie, die dann natürlich wiederum ausschließlich aus dem Notenergiespeicher bereitgestellt wird.

Gemäß einer anderen Weiterbildung des erfindungsgemäßen Verfahrens wird das Überprüfen der Kenngröße von dem Pitchsystem selbständig eingeleitet. Mit anderen Worten erfolgt die Überprüfung autark, unabhängig von der Generatorsteuerung. Hierdurch ergibt sich der Vorteil, dass die übrigen Komponenten der Windenergieanlage, also beispielsweise die Generatorsteuerung oder andere Steuerungssysteme, nicht an das Pitchsystem angepasst werden müssen, um die Überprüfung der Kenngröße durch das Pitchsystem zu ermöglichen. Ein derart betriebenes Pitchsystem kann somit problemlos in einer herkömmlichen Windenergieanlage verbaut werden.

Der Notenergiespeicher kann aber auch in einem Zusammenspiel mit der Generatorsteuerung überprüft werden. Hierzu sieht eine Ausführungsform des erfindungsgemäßen Verfahrens vor, das Überprüfen des Notenergiespeichers auf ein Prüfsignal der Generatorsteuerung hin zumindest einzuleiten. Hierdurch ergibt sich der Vorteil, dass durch die Generatorsteuerung das Überprüfen der Kenngröße und das Ansteuern der Antriebseinrichtung zum Einstellen des Anstellwinkels miteinander koordiniert werden können. So kann die Generatorsteuerung zum Beispiel das Prüfsignal immer dann erzeugen, wenn ein für die Überprüfung der Kenngröße günstiges Lastprofil durch die Antriebseinrichtung erzeugt wird.

Da die Generatorsteuerung in der Regel einen verhältnismäßig leistungsstarken Prozessor aufweist, sieht eine andere Weiterbildung des erfindungsgemäßen Verfahrens vor, durch die Generatorsteuerung das Überprüfen der Kenngröße auch zu steuern und bevorzugt auch die Betriebsgrößen der Windkraftanlage durch die Generatorsteuerung auszuwerten, um den Alterungszustand des Notenergiespeichers festzustellen. Bei dieser Weiterbildung des Verfahrens muss also in dem Pitchsystem selbst kein besonders ausgestalteter Prozessor bereitgestellt werden.

Obwohl der Notenergiespeicher während der Überprüfung zumindest teilweise entladen wird, muss dies nicht zwangsläufig dazu führen, dass für den Fall, dass während des Überprüfens das externe Versorgungsnetz ausfällt, keine Notfahrt mehr möglich ist. Weist die Windenergieanlage mehrere Rotorblätter auf und werden entsprechend Anstellwinkel mehrere Rotorblätter mittels dafür jeweils bereitgestellter Antriebseinrichtungen des Pitchsystems eingestellt, so werden gemäß einer Ausführungsform des erfindungsgemäßen Verfahrens im Normalbetrieb nur einige dieser Antriebseinrichtungen, bevorzugt nur eine einzige Antriebseinrichtung, gleichzeitig getestet. Mit anderen Worten werden dann nie alle Antriebseinrichtungen zugleich ausschließlich mit elektrischer Energie aus ihrem Notenergiespeicher versorgt, um die Notenergiespeicher zu überprüfen. Kommt es zu einem Ausfall des Versorgungsnetzes, so können also stets zumindest einige der Rotorblätter in die Sicherungsposition verfahren werden. Dies reicht in der Regel aus, um einen Rotor abzubremsen und die Windenergieanlage in einen sicheren Zustand zu überführen.

Zudem kann Teil des Verfahrens sein, die Notenergiespeicher nur teilweise zu entladen, so dass eine Notfahrt stets möglich ist. Dann kann das Verfahren auch an allen Blättern gleichzeitig durchgeführt werden.

Ein weiterer Aspekt der Erfindung betrifft ein Pitchsystem zum Einstellen eines Anstellwinkels wenigstens eines Rotorblattes einer Windenergieanlage. Das Pitchsystem weist wenigstens eine Antriebseinrichtung zum Einstellen eines Anstellwinkels wenigstens eines Rotorblattes auf. Über einen Versorgungsanschluss kann das Pitchsystem elektrische Energie aus einem (externen) elektrischen Versorgungsnetz empfangen. Ein Notenergiespeicher des Pitchsystems ist dazu ausgelegt, wenigstens eine der Antriebseinrichtungen beim Ausfall des Versorgungsnetzes zu betreiben. Eine Steuereinrichtung des Pitchsystems ist dazu eingerichtet, das Pitchsystem nach einer Ausführungsform des erfindungsgemäßen Verfahrens zu betreiben. Das erfindungsgemäße Pitchsystem weist den Vorteil auf, dass der Notenergiespeicher für die Antriebseinrichtungen auch in einem Normalbetriebsmodus der Windenergieanlage überprüft werden kann.

Bei dem erfindungsgemäßen Pitchsystems ist wenigstens eine der Antriebseinrichtungen zusammen mit ihrem Notenergiespeicher an einem Gleichspannungs-Zwischenkreis eines Frequenzumrichters angeschlossen. Hierbei ist der Zwischenkreis über einen DC/DC-Wandler mit dem Versorgungsanschluss gekoppelt. Das erfindungsgemäße Pitchsystems weist den Vorteil auf, dass das Überprüfen des Notenergiespeichers einfach dadurch eingeleitet werden kann, dass der DC/DC-Wandler deaktiviert wird. Durch das Deaktivieren wird dann ein Stromfluss durch den DC/DC-Wandler blockiert. Das Deaktivieren kann z.B. dadurch erfolgen, Leistungs-Halbleiterschalter des DC/DC-Wandlers in einen sperrenden Zustand geschaltet werden. Es sind also keine zusätzlichen elektrischen Schaltungen bereitzustellen, um den Notenergiespeicher zu überprüfen.

Die Erfindung umfasst auch weitere bauliche Weiterbildungen des erfindungsgemäßen Pitchsystems, wie sie im Zusammenhang mit den Weiterbildungen des erfindungsgemäßen Verfahrens bereits beschrieben wurden. Die sich ergebenden Weiterbildungen des erfindungsgemäßen Pitchsystems werden hier deshalb nicht noch einmal gesondert beschrieben.

Die Erfindung wird im Folgenden anhand von Ausführungsbeispielen näher erläutert. Dazu zeigen:
- FIG 1: ein Blockschaltbild eines Blattverstellsystems gemäß einer Ausführungsform des erfindungsgemäßen Pitchsystems und
- FIG 2: einen Schaltplan zu einer Variante des Blattverstellsystems von FIG 1.

Die Beispiele stellen bevorzugte Ausführungsformen der Erfindung dar.

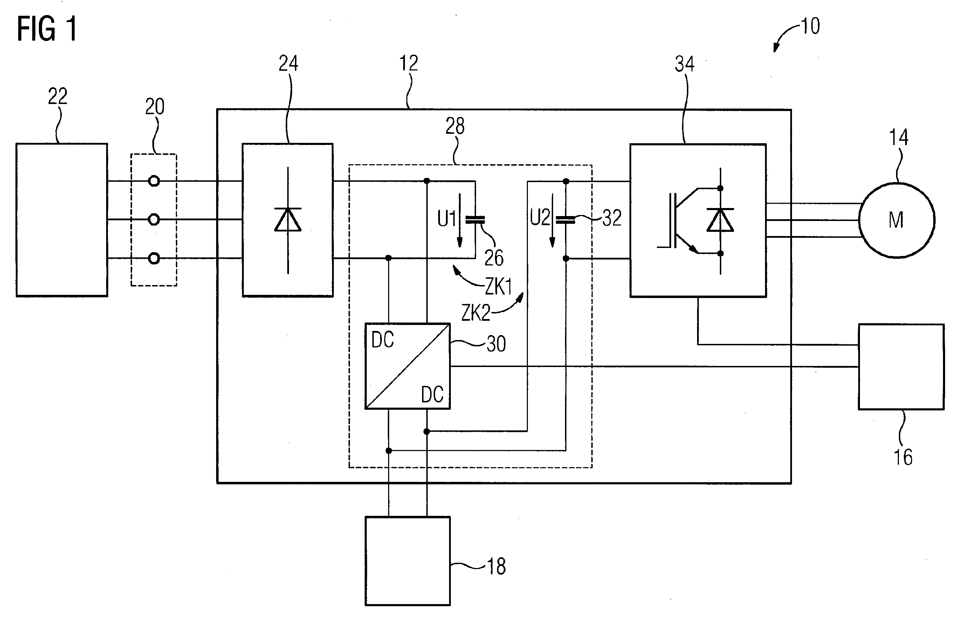

In FIG 1 ist eine Blattverstelleinrichtung oder Stellanlage 10 gezeigt, die in einer Windenergieanlage eingebaut ist. Mittels der Stellanlage 10 können Anstellwinkel von (nicht dargestellten) Rotorblättern eines Rotors der Windenergieanlage eingestellt werden. Von der Stellanlage 10 sind in FIG 1 nur Komponenten gezeigt, durch welche ein einzelnes der Rotorblätter in Bezug auf seinen Anstellwinkel eingestellt werden kann. Bei den Komponenten handelt es sich um einen Frequenzumrichter 12, einen Elektromotor 14, eine Steuereinheit 16 und einen Notenergiespeicher 18. Über einen Netzanschluss 20 der Stellanlage 10 ist diese mit einem Versorgungsnetz 22 elektrisch verbunden, aus welchem der Frequenzumrichter 12 elektrische Energie empfängt. Das Versorgungsnetz 22 kann beispielsweise ein dreiphasiges Wechselspannungsnetz sein, in welches durch die Windenergieanlage auch Energie eingespeist wird, die durch einen Generator der Windenergieanlage erzeugt wird.

Der Elektromotor 14 ist über ein (nicht dargestelltes) Getriebe mit dem Rotorblatt mechanisch gekoppelt. Durch Betreiben des Elektromotors 14 wird das Rotorblatt um seine Längsachse rotiert und somit sein Anstellwinkel verändert.

Die Energie für den Betrieb empfängt der Elektromotor 14 von dem Frequenzumrichter 12. Der Frequenzumrichter 12 wandelt dazu die aus dem Versorgungsnetz 22 empfangene Wechselspannung mittels eines Gleichrichters 24 in eine gleichgerichtete Spannung U1 um, die über einem Glättungskondensator 26 eines netzseitigen Teils ZK1 eines Gleichspannungs-Zwischenkreises 28 des Frequenzumrichters 12 abfällt.

Über einen DC/DC-Wandler 30 sind der netzseitiger Teil ZK1 des Zwischenkreises 28 und ein motorseitiger Teil ZK2 des Zwischenkreises 28 miteinander verbunden. Durch den DC/DC-Wandler 30 des Frequenzumrichters 12 wird aus der Spannung U1 eine gleichgerichtete Spannung U2 erzeugt, welche über einem weiteren Filterkondensator 32 des Zwischenkreises 28 abfällt. Die gleichgerichtete Spannung U1 kann hier z.B. einen Effektivwert von 530 V aufweisen, die Spannung U2 einen Effektivwert zwischen 300 V und 700 V. Aus der Spannung U2 erzeugt ein Stellantrieb oder steuerbarer Wechselrichter 34 des Frequenzumrichters 12 Wechselspannungen, durch welche in dem Elektromotor 14 ein momentbildender Strom hervorgerufen wird.

Der Notenergiespeicher 18 ist an den motorseitigen Teil ZK2 des Zwischenkreises 28 angeschlossen. Er wird im Betrieb des Frequenzumrichters 12 über den DC/DC-Wandler 30 mit elektrischer Energie aus dem Versorgungsnetz 22 aufgeladen.

Der DC/DC-Wandler 30 und der Wechselrichter 34 sind mit der Steuereinheit 16 gekoppelt. Die Steuereinheit 16 empfängt des Weiteren ein Ansteuersignal von einer (nicht dargestellten) Generatorsteuerung der Windenergieanlage. Durch dieses Ansteuersignal wird ein Soll-Anstellwinkel für das Rotorblatt vorgegeben. In Abhängigkeit von dem Ansteuersignal steuert die Steuereinheit 16 den Stellantrieb oder Wechselrichter 34, um den Anstellwinkel des Rotorblatts mittels des Elektromotors 14 auf den Soll-Anstellwinkel einzustellen. Die Steuereinheit 16 kann beispielsweise einen Mikrocontroller oder einen Signalprozessor umfassen, durch welchen ein Steuerprogramm ausgeführt wird.

Während des Normalbetriebs der Windenergieanlage wird der Notenergiespeicher 18 in regelmäßigen Abständen, z.B. wöchentlich, kontrolliert auf einen vorbestimmten Ladezustand entladen und anschließend durch den DC/DC-Wandler 30 wieder aufgeladen. Der Entladevorgang wird durch den DC/DC-Wandler 30 gesteuert, der dem Notenergiespeicher 18 und dem Wechselrichter 34 vorgeschaltet ist. Dazu wird der DC/DC-Wandler 30 zum Einleiten des Entladevorgangs durch die Steuereinheit 16 abgeschaltet. Hierdurch sind dann der netzseitige Teil ZK1 und der motorseitige Teil ZK2 des Zwischenkreises 28 voneinander elektrisch entkoppelt, d. h. der Wechselrichter 34 und der Elektromotor 16 werden nur aus dem Notenergiespeicher 18 mit elektrischer Energie versorgt.

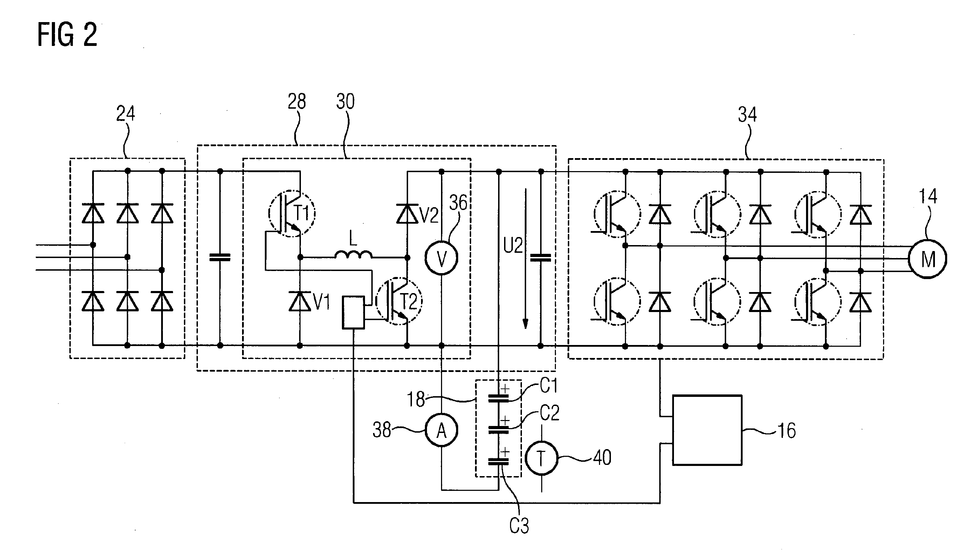

Die Überprüfung des Zustands des Notenergiespeichers 18 während des End- und Wiederaufladens wird im Folgenden anhand von FIG 2 näher erläutert. In FIG 2 ist dazu eine mögliche Schaltungsvariante gezeigt, durch welche die Stellanlage 10 von FIG 1 beispielsweise realisiert werden kann. In der in FIG 2 gezeigten Variante ist der Gleichrichter 24 durch einen netzgeführten Gleichrichter mit drei aus Dioden gebildeten Halbbrücken realisiert. In dem Zwischenkreis 28 ist als DC/DC-Wandler 30 ein unidirektionaler DC/DC-Wandler aus zwei Halbleiter-Leistungsschaltern T1, T2, Dioden und einer Induktivität L gebildet. Der Wechselrichter 34 umfasst hier drei Halbbrücken mit jeweils zwei Halbleiter-Leistungsschaltern sowie mit diesen antiparallel geschalteten Freilaufdioden. Bei den Halbleiter-Leistungsschaltern des DC/DC-Wandlers 30 und des Wechselrichters 34 kann es sich beispielsweise um IGBT (Insulatet Gate Bipolar Transistor) handeln.

Der Notenergiespeicher 18 umfasst hier eine Reihenschaltung aus Doppelschichtkondensatoren C1 bis C3, wobei die in FIG 2 gezeigten Doppelschichtkondensatoren C1 bis C3 lediglich repräsentativ für eine größere Anzahl von Doppelschichtkondensatoren stehen. Der Notenergiespeicher kann auch durch Parallelschaltung weiterer Energiespeicher erweitert werden.

Die Steuereinheit 16 überwacht die Spannung U2, die der von dem Notenergiespeicher 18 erzeugten Spannung entspricht, mittels einer in den DC/DC-Wandler 30 integrierten Spannungsmesseinrichtung 36. Der Notenergiespeicher 18 ist über einen Stromwandler 38 mit dem motorseitigen Teil ZK2 des Zwischenkreises 28 gekoppelt. Ein Signal des Stromwandlers 38 wird ebenfalls von der Steuereinheit 16 empfangen und ausgewertet. Über eine Temperaturmessschaltung 40 wird eine Umgebungstemperatur der Doppelschichtkondensatoren C1 bis C3 erfasst. Die Temperaturmessschaltung 40 kann beispielsweise Temperaturensensoren umfassten, welche auf einer Leiterplatte befestigt sind, die auch die Kondensatoren C1 bis C3 mit dem Zwischenkreis 28 elektrisch verbindet.

Durch die Steuereinheit 16 wird so insgesamt der Entladevorgang und auch der anschließende Aufladevorgang durch Messen der Spannung U2, des Entlade- bzw. Aufladestroms des Notenergiespeichers 18 und der Umgebungstemperatur beobachtet und ausgewertet. Aus diesen Daten wird die Kapazität des Notenergiespeichers 18 bestimmt. Zum Erzeugen des Aufladestroms wird der DC/DC-Wandler 30 dabei von der Steuereinheit 16 wieder aktiviert und damit die Energiezufuhr aus dem Versorgungsnetz 22 hin zum Notenergiespeicher 18 ermöglicht. Der DC/DC-Wandler 30 wird dabei von der Steuereinheit 16 aktiviert, wenn die Spannung U2 einen vorbestimmten Speicherspannungs-Schwellwert unterschreitet. Der Wert ist bei der Steuereinheit 16 frei einstellbar.

Die Speicherprüfung kann periodisch durchgeführt werden. Dabei kann das Pitchsystem die Prüfung autark durchführen, d. h. sämtliche Steuerbefehle für den DC/DC-Wandler 30 sowie die Auswertung der Messwerte wird durch die Steuereinheit 16 durchgeführt. Die Speicherprüfung kann also automatisiert und flexibel gesteuert werden. Dabei ist es insbesondere auch möglich, Sicherheitsaspekte bei der Überprüfung zu berücksichtigen. So wird etwas beachtet, dass die Prüfung des Notenergiespeichers 18 zu keinem Zeitpunkt für zwei oder drei Notenergiespeicher der Stellanlage 10 gleichzeitig erfolgt.

Die Speicherprüfung kann auch von der Stellanlage 10 übergeordneten Generatorsteuerung gesteuert und überwacht werden.

Für den Fall, dass eine Überprüfung des Notenergiespeichers 18 gemäß einer Zeitvorgabe durchzuführen ist und in diesem Zeitraum die Windenergieanlage stillsteht, weil etwa Windstille herrscht, kann der Elektromotor 14 in einem begrenzten Bereich verfahren werden, so dass auch hierdurch ein Entladen des Notenergiespeichers 18 ermöglicht ist.

Anstelle des in FIG 2 gezeigten netzgeführten Gleichrichters 24 kann auch vorgesehen sein, einen steuerbaren Gleichrichter vorzusehen, etwa eine Hochsetzsteller. Dann ist es möglich, die Energiezufuhr aus dem Versorgungsnetz 22 mittels dieses Gleichrichters zu blockieren. Dann ist es nicht mehr nötig, für das Entkoppeln des Notenergiespeichers von dem Versorgungsnetz einen DC/DC-Wandler im Zwischenkreis zu deaktivieren. Anstelle des Gleichrichters und des unidirektionalen DC/DC-Wandlers kann auch eine netzrückspeisende Wechselrichterbrücke mit einem bidirektionalen DC/DC-Wandler eingesetzt werden.

Bei dem Notenergiespeicher 18 kann es sich, wie in dem obigen Beispiel, um eine Schaltung aus Doppelschichtkondensatoren handeln. Alternativ dazu kann der Notenergiespeicher 18 auch Lithiumbatteriezellen oder eine Kombination aus den beiden Speichertypen (sogenannte Hybridspeicher) umfassen.

Durch die Beispiele ist gezeigt, wie auch während eines Normalbetriebs der Windenergieanlage ein Entladevorgang des Notenergiespeichers ermöglicht ist, indem ein DC/DC-Wandler, der auch ein Ladegerät darstellt, keine Energie in den Notenergiespeicher und in den Wechselrichter speist. Es ist hierbei keine Trennung des Notenergiespeichers und des Ladegeräts für die Prüfung notwendig, d.h. der Schaltungsaufwand ist sehr gering. Des Weiteren ist der Prüfablauf stark vereinfacht gegenüber bekannten Verfahren, indem keine definierte oder reproduzierbare Last eingestellt werden muss und bereits genutzte Messvorrichtungen des DC/DC-Wandlers, hier die Spannungsmesseinrichtung 36, verwendet werden können.

## Patentansprüche

1. Verfahren zum Betreiben eines Pitchsystems (10) einer Windenergieanlage, wobei
- in einem Normalbetriebsmodus der Windenergieanlage mittels einer Antriebseinrichtung (14) des Pitchsystems (10) ein Anstellwinkel eines Rotorblattes der Windenergieanlage in Abhängigkeit von einem Ansteuersignal einer Generatorsteuerung der Windenergieanlage eingestellt und die Antriebseinrichtung (14) hierbei zumindest zeitweise mit elektrischer Energie aus einem externen Versorgungsnetz (22) versorgt wird und
- in einem Notbetriebsmodus das Rotorblatt mittels der Antriebseinrichtung (14) in eine Sicherungsposition verfahren und hierbei mit elektrischer Energie aus einem Notenergiespeicher (18) des Pitchsystems (10) versorgt wird, und
- zum Überprüfen einer Kenngröße des Notenergiespeichers (18) die Antriebseinheit (14) auch im Normalbetriebsmodus zeitweise ausschließlich mit elektrischer Energie aus dem Notenergiespeicher (18) versorgt wird,
**dadurch gekennzeichnet , dass** die Antriebseinrichtung (14) und der Notenergiespeicher (18) über wenigstens einen DC/DC-Wandler (30) mit elektrischer Energie aus dem Versorgungsnetz (22) versorgt werden und zum Überprüfen der Kenngröße der wenigstens eine DC/DC-Wandler (30) deaktiviert wird.

2. Verfahren nach Anspruch 1, **dadurch gekennzeichnet, dass** als Kenngröße eine Kapazität und/oder ein Innenwiderstand eines Kondensators (C1 bis C3) des Notenergiespeichers (18), insbesondere eines Doppelschichtkondensators (C1 bis C3), überprüft und hierzu insbesondere ein Kapazitätswert für die Kapazität ermittelt wird.

3. Verfahren nach Anspruch 1 oder 2, **dadurch gekennzeichnet, dass** zum Überprüfen der Kenngröße wenigstens ein Wert zu wenigstens einer aus den folgenden Betriebsgrößen ermittelt wird: einer an dem Notenergiespeicher anliegenden elektrischen Spannung (36), einem zum oder aus dem Notenergiespeicher fließenden elektrischen Strom (38), einer Umgebungstemperatur (40) des Notenergiespeichers, einer Innentemperatur des Notenergiespeichers, eine Zeitdauer für einen vorbestimmten Entlade- und/oder Aufladevorgang.

4. Verfahren nach einem der vorhergehenden Ansprüche, **dadurch gekennzeichnet, dass** zum Überprüfen der Kenngröße ein Spannungswert (U2) zu einer von dem Notenergiespeicher (18) erzeugten elektrischen Spannung mittels einer Spannungsmesseinrichtung (36) eines DC/DC-Wandlers ermittelt wird.

5. Verfahren nach einem der vorhergehenden Ansprüche, **dadurch gekennzeichnet, dass** im Normalbetrieb und während eines Stillstands eines Rotors der Windenergieanlage zum Überprüfen der Kenngröße der Anstellwinkel in einem vorbestimmten Winkelbereich verfahren wird.

6. Verfahren nach einem der vorhergehenden Ansprüche, **dadurch gekennzeichnet, dass** das Überprüfen der Kenngröße von dem Pitchsystem (10) selbständig eingeleitet wird.

7. Verfahren nach einem der vorhergehenden Ansprüche, **dadurch gekennzeichnet, dass** das Überprüfen der Kenngröße auf ein Prüfsignal der Generatorsteuerung hin zumindest eingeleitet wird, insbesondere auch gesteuert wird und hierbei bevorzugt auch Betriebsgrößen der Windenergieanlage durch die Generatorsteuerung ausgewertet werden.

8. Verfahren nach einem der vorhergehenden Ansprüche,**dadurch gekennzeichnet, dass**
- Anstellwinkel mehrerer Rotorblätter mittels dafür jeweils bereitgestellter Antriebseinrichtungen (14) des Pitchsystems (10) eingestellt werden und die Antriebseinrichtungen (14) jeweils mit einem eigenen Notenergiespeicher (18) gekoppelt sind, und
- im Normalbetrieb nur einige der Antriebseinrichtungen (14), bevorzugt nur eine einzige Antriebseinrichtung (14), gleichzeitig ausschließlich mit elektrischer Energie aus ihrem Notenergiespeicher versorgt wird, um die Kenngröße desselben zu überprüfen.

9. Pitchsystem (10) zum Einstellen eines Anstellwinkels wenigstens eines Rotorblattes einer Windenergieanlage, umfassend:
- wenigstens eine Antriebseinrichtung (14) zum Einstellen eines Anstellwinkels wenigstens eines Rotorblattes,
- einen Versorgungsanschluss (20) zum Empfangen von elektrischer Energie aus einem elektrischen Versorgungsnetz (22),
- einen Notenergiespeicher (18) zum Betreiben wenigstens einer der Antriebseinrichtungen (14) bei Ausfall des Versorgungsnetzes (22),
- eine Steuereinrichtung (16), die dazu ausgelegt ist, die wenigstens eine Antriebseinrichtung (14) in Abhängigkeit von einem Ansteuersignal einer Generatorsteuerung zu steuern,
**dadurch gekennzeichnet, dass** die Steuereinrichtung dazu eingerichtet ist, das Pitchsystem (10) nach einem Verfahren gemäß einem der vorhergehenden Ansprüche zu betreiben, und hierzu wenigstens eine der Antriebseinrichtungen (14) zusammen mit ihrem Notenergiespeicher (18) an einen Gleichspannungs-Zwischenkreis (ZK2) eines Frequenzumrichters (12) angeschlossen ist und der Zwischenkreis (ZK2) über einen DC/DC-Wandler (30) mit dem Versorgungsanschluss (20) gekoppelt ist.

## Claims

1. Method for operating a pitch system (10) of a wind energy system, wherein
- in a normal operating mode of the wind energy system, using an actuating device (14) of the pitch system (10), a pitch angle of a rotor blade of the wind energy system is set according to a control signal from a generator control system of the wind energy system and the actuating device (14) is thereby supplied with electrical energy at least temporarily from an external electrical supply network (22) and
- in an emergency operating mode, the rotor blade is moved by means of the actuating device (14) into a safety position and, for this purpose, is supplied with electrical energy from an emergency energy store (18) of the pitch system (10) and
- in order to test a characteristic value of the emergency energy store (18), the actuating unit (14) is supplied temporarily with electrical energy exclusively from the emergency energy store (18), including in the normal operating mode,
**characterised in that** the actuating device (14) and the emergency energy store (18) are supplied with electrical energy from the supply network (22) via at least one DC/DC converter (30) and that, for testing the characteristic value, the at least one DC/DC converter (30) is deactivated.

2. Method according to claim 1, **characterised in that**, as the characteristic value, a capacitance and/or an internal resistance of a capacitor (C1 to C3) of the emergency energy store (18), in particular a double-layer capacitor (C1 to C3), is tested and, for this purpose, in particular, a capacitance value is determined for the capacitance.

3. Method according to claim 1 or 2, **characterised in that**, in order to test the characteristic value, at least one value is determined for at least one of the following operating variables: An electrical voltage (36) applied to the emergency energy store, an electric current (38) flowing into or out of the emergency energy store, an ambient temperature (40) of the emergency energy store, an internal temperature of the emergency energy store, a duration for a pre-determined discharging and/or charging process.

4. Method according to one of the preceding claims, **characterised in that** in order to test the characteristic value, an electrical voltage value (U2) for an electrical voltage generated by the emergency energy store (18) is determined by means of a voltage measuring device (36) of a DC/DC converter.

5. Method according to one of the preceding claims, **characterised in that**, during normal operation and during a shutdown of a rotor of the wind energy system, for testing the characteristic value, the pitch angle is moved within a pre-determined angular range.

6. Method according to one of the preceding claims, **characterised in that** the testing of the characteristic value is automatically initiated by the pitch system (10).

7. Method according to one of the preceding claims, **characterised in that** testing of the characteristic value is at least instigated, in particular also controlled, by a test signal from the generator control system and operating variables of the wind energy system are preferably also evaluated by the generator control system.

8. Method according to one of the preceding claims, **characterised in that**
- pitch angles of a plurality of rotor blades are set by means of actuating devices (14) of the pitch system (10) respectively provided therefor and the actuating devices (14) are each coupled to an individual emergency energy store (18) and
- in normal operation, only some of said actuating devices (14), and preferably only one single actuating device (14), are simultaneously supplied with electrical energy exclusively from the emergency energy store thereof, in order to test the characteristic value of said emergency energy store.

9. Pitch system (10) for setting a pitch angle of at least one rotor blade of a wind energy system, comprising:
- at least one actuating device (14) for setting a pitch angle of at least one rotor blade,
- a supply connection (20) for receiving electrical energy from an electrical supply network (22),
- an emergency energy store (18) for operating at least one of the actuating devices (14) in the event that the supply network (22) fails,
- a control device (16), which is configured to control the at least one actuating device (14), depending on a control signal from a generator control system,
**characterised in that** the control device is configured to operate the pitch system (10) according to a method as specified in one of the preceding claims and for this purpose at least one of the actuating devices (14) is connected, together with the emergency energy supply (18) thereof, to a DC link circuit (ZK2) of a frequency converter (12) and the link circuit (ZK2) is coupled to the supply connection (20) via a DC/DC converter (30).

## Revendications

1. Procédé pour faire fonctionner un système ( 10 ) de pas d'une éolienne, dans lequel
- dans un mode de fonctionnement normal de l'éolienne, on règle, au moyen d'un dispositif ( 14 ) d'entraînement du système ( 10 ) de pas, un angle d'attaque d'une lame rotorique de l'éolienne en fonction d'un signal d'excitation d'une commande de génératrice de l'éolienne et on alimente le dispositif ( 14 ) d'entraînement à cet effet au moins de temps en temps en énergie électrique provenant d'un réseau ( 22 ) d'alimentation extérieur et
- dans un mode de fonctionnement de secours, on met la lame rotorique dans une position de sécurité au moyen du dispositif ( 14 ) d'entraînement et on l'alimente ainsi en énergie électrique à partir d'un accumulateur ( 18 ) d'énergie de secours du système ( 10 ) de pas, et
- pour le contrôle d'une grandeur caractéristique de l'accumulateur ( 18 ) d'énergie de secours, on alimente le groupe ( 14 ) d'entraînement également en mode de fonctionnement normal de temps en temps exclusivement en énergie électrique provenant de l'accumulateur ( 18 ) d'énergie de secours,
**caractérisé en ce que** l'on alimente le dispositif ( 14 ) d'entraînement et l'accumulateur ( 18 ) d'énergie de secours en énergie électrique provenant du réseau ( 22 ) d'alimentation par au moins un convertisseur ( 30 ) courant continu/courant continu et, pour le contrôle de la grandeur caractéristique, on désactive le au moins un convertisseur ( 30 ) courant continu/courant continu.

2. Procédé suivant la revendication 1, **caractérisé en ce que** l'on contrôle comme grandeur caractéristique une capacité et/ou une résistance intérieure d'un condensateur ( C1 à C3 ) de l'accumulateur ( 18 ) d'énergie de secours, notamment d'un condensateur ( C1 à C3 ) à double couche, et on détermine, à cet effet, notamment une valeur de la capacité.

3. Procédé suivant la revendication 1 ou 2, **caractérisé en ce que**, pour le contrôle de la grandeur caractéristique, on détermine au moins une valeur d'au moins l'une des grandeurs de fonctionnement suivantes : une tension ( 36 ) électrique s'appliquant à l'accumulateur d'énergie de secours, un courant ( 38 ) électrique allant à l'accumulateur d'énergie de secours ou en partant, une température ( 40 ) ambiante de l'accumulateur d'énergie de secours, une température intérieure de l'accumulateur d'énergie de secours, une durée pour une opération déterminée à l'avance de décharge et/ou de charge.

4. Procédé suivant l'une des revendications précédentes, **caractérisé en ce que**, pour le contrôle de la grandeur caractéristique, on détermine une valeur ( U2 ) d'une tension électrique, produite par l'accumulateur ( 18 ) d'énergie de secours, à l'aide d'un dispositif ( 36 ) de mesure de la tension d'un convertisseur courant continu/courant continu.

5. Procédé suivant l'une des revendications précédentes, **caractérisé en ce que**, dans le fonctionnement normal et pendant un arrêt d'un rotor de l'éolienne, on déplace, pour le contrôle de la grandeur caractéristique, l'angle d'attaque dans une plage angulaire déterminée à l'avance.

6. Procédé suivant l'une des revendications précédentes, **caractérisé en ce que** le système ( 10 ) de pas fait débuter de soi-même le contrôle de la grande caractéristique.

7. Procédé suivant l'une des revendications précédentes, **caractérisé en ce que** l'on fait au moins débuter le contrôle de la grandeur caractéristique, notamment en la commandant aussi, sur un signal de contrôle de la commande de la génératrice et la commande de la génératrice exploite ainsi, de préférence également, des grandeurs de fonctionnement de l'éolienne.

8. Procédé suivant l'une des revendications précédentes, **caractérisé en ce que**
- on règle l'angle d'attaque de plusieurs lames rotoriques au moyen de dispositif ( 14 ) d'entraînement du système ( 10 ) de pas mis à disposition respectivement pour cela et on accouple les dispositifs ( 14 ) d'entraînement respectivement à un accumulateur ( 18 ) d'énergie de secours propre, et
- dans le fonctionnement normal, on n'alimente que certains des dispositifs ( 14 ) d'entraînement, de préférence qu'un seul dispositif ( 14 ) d'entraînement, en même temps exclusivement en énergie électrique provenant de son accumulateur d'énergie de secours pour en contrôler la grandeur caractéristique.

9. Système ( 10 ) de pas pour le réglage d'un angle d'attaque d'au moins une lame rotorique d'une éolienne comprenant :
- au moins un dispositif ( 14 ) d'entraînement pour le réglage d'un angle d'attaque d'au moins une lame rotorique,
- une borne ( 20 ) d'alimentation pour la réception d'énergie électrique provenant d'un réseau ( 22 ) d'alimentation électrique,
- un accumulateur ( 18 ) d'énergie de secours pour faire fonctionner au moins l'un des dispositifs ( 14 ) d'entraînement en cas de panne du réseau ( 22 ) d'alimentation,
- un dispositif ( 16 ) de commande qui est conçu pour commander le au moins un dispositif ( 14 ) d'entraînement en fonction d'un signal d'excitation d'une commande de génératrice,
**caractérisé en ce que** le dispositif de commande est conçu pour faire fonctionner le système ( 10 ) de pas selon un procédé suivant l'une des revendications précédentes et, à cet effet, au moins l'un des dispositifs ( 14 ) d'entraînement est, ensemble avec son accumulateur ( 18 ) d'énergie de secours, raccordé à un circuit intermédiaire ( ZK2 ) en tension continue d'un convertisseur ( 12 ) de fréquence et le circuit ( ZK2 ) intermédiaire est couplé à la borne ( 20 ) d'alimentation par un convertisseur ( 30 ) courant continu/courant continu.
